# FASCICULE DE BREVET EUROPEEN

(11) **EP 0 454 564 B1**
(45) Date de publication et mention de la délivrance du brevet: **09.03.1994**
(21) Numéro de dépôt: 91401068.1
(22) Date de dépôt: 23.04.1991
(51) Int. Cl.: F42B 3/00, B64G 1/64

(54) **Mécanisme de liaison à déverrouillage rapide, utilisable notamment sur des engins spatiaux**
Mechanismus für Schnellentkupplung zum Gebrauch im Raumfahrzeug
Quick-release locking mechanism for use in spacecraft

(30) Priorité: 25.04.1990 FR 9005266
(43) Date de publication de la demande: 30.10.1991
(73) Titulaire: AEROSPATIALE Société Nationale Industrielle, 75781 Paris Cédex 16 (FR)
(72) Inventeur: Pire, Michel, F-33160 Saint Medard en Jalles (FR)
(74) Mandataire: Mongrédien, André

(56) Documents cités:
- EP-A- 0 363 242
- FR-A- 2 616 856
- FR-A- 2 616 857
- US-A- 3 204 515

## Description

L'invention concerne un mécanisme permettant de relier deux sous-ensembles, notamment sur un engin spatial, et de déverrouiller ou désolidariser rapidement ces sous-ensembles.

On connaît déjà un certain nombre de mécanismes de liaison à déverrouillage rapide, avec ou sans éjection, dont l'énergie motrice est généralement fournie par un système pyrotechnique appartenant au mécanisme ou situé à l'extérieur de celui-ci.

Ainsi, le mode de réalisation des figures 2A et 2B du document FR-A-2 616 857 décrit un mécanisme de liaison à déverrouillage rapide sans éjection commandé par un système pyrotechnique appartenant au mécanisme.

Ce mécanisme comprend une tige logée en totalité à l'intérieur d'un cylindre appartenant à un premier des sous-ensembles. L'une des extrémités de cette tige comporte un filetage sur lequel est normalement en prise un écrou segmenté entouré par une bague rigide liée à un piston annulaire disposé coaxialement autour de la tige et apte à coulisser dans le cylindre. L'écrou segmenté prend appui sur une douille vissée dans une pièce qui prend elle-même appui sur le deuxième sous-ensemble. L'extrémité opposée de la tige comporte également un filetage sur lequel est vissé un écrou qui prend appui sur une rondelle de butée montée à l'intérieur du cylindre. Cet écrou permet d'appliquer les deux sous-ensembles l'un contre l'autre avec une précontrainte déterminée, par l'intermédiaire de la tige et de l'écrou segmenté, avant que le cylindre ne soit fermé.

Dans ce mécanisme, le déverrouillage ou la désolidarisation des deux sous-ensembles est obtenu au moyen d'un système pyrotechnique placé dans une chambre formée entre le cylindre et la face du piston tournée vers le deuxième sous-ensemble. Les gaz de combustion libérés provoquent le déplacement du piston et de la bague rigide qu'il supporte en éloignement du deuxième sous-ensemble et libère ainsi l'écrou segmenté du filetage formé à l'extrémité correspondante de la tige.

Le mécanisme illustré dans ce document, comme dans les autres documents connus parmi lesquels on citera notamment les documents FR-A-2 616 856, US-A-3 597 919 et US-A-3 196 745, se caractérise notamment par un montage particulièrement délicat et complexe et par un contrôle peu précis de la tension de serrage.

Ainsi, dans le document FR-A-2 616 857, le mécanisme de liaison est fixé sur le deuxième sous-ensemble par un écrou qu'il est très difficile de manoeuvrer lorsque l'accessibilité entre les deux pièces est réduite. En conséquence, la fiabilité de la fixation est également diminuée. Par ailleurs, la tension de serrage est appliquée comme on l'a vu en vissant un écrou sur l'extrémité filetée de la tige opposée à la deuxième pièce, de telle sorte que la tension de serrage ne peut être contrôlée que par une mesure du couple appliqué sur cet écrou. Etant donné que cette mesure de couple intégre les différents frottements, la tension ne peut être contrôlée qu'avec une précision très limitée, de l'ordre de ± 30 %.

L'invention a précisément pour objet un mécanisme de liaison, à déverrouillage rapide, dont la conception originale améliore de façon appréciable les conditions de montage, notamment dans un environnement peu accessible, ce qui contribue à accroître la fiabilité de la fixation, cette conception originale autorisant également un contrôle plus précis de la tension de serrage, qui peut être fait par une mesure d'allongement, par exemple au moyen d'une technique ultrasonore qui s'affranchit des frottements et présente, de ce fait, une précision de l'ordre de ± 10 %.

Conformément à l'invention, ce résultat est obtenu au moyen d'un mécanisme de liaison, à déverrouillage rapide, de deux sous-ensembles, comprenant deux organes normalement solidarisés en translation par des moyens de raccordement déconnectables, chacun de ces organes prenant appui respectivement sur l'un des deux sous-ensembles de façon à appliquer ces derniers l'un contre l'autre, et des moyens de commande dont un actionnement déverrouille les moyens de raccordement, désolidarisant ainsi lesdits organes, caractérisé par le fait que lesdits organes comprennent une première tige montée dans un premier des sous-ensembles et comportant une tête de manoeuvre accessible depuis l'extérieur de ce premier sous-ensemble, et une deuxième tige comportant un filetage apte à être vissé dans le deuxième sous-ensemble, lesdits moyens de raccordement déconnectables solidarisant normalement lesdites première et deuxième tiges également en rotation, de telle sorte que le filetage de la deuxième tige peut être vissé dans le deuxième sous-ensemble en agissant sur la tête de manoeuvre de la première tige.

Dans un mode de réalisation préféré de l'invention, les moyens de raccordement déconnectables comprennent une pièce annulaire segmentée ayant un profil intérieur complémentaire des surfaces extérieures profilées formées sur les extrémités adjacentes de la première tige et de la deuxième tige, et une bague rigide normalement placée autour de la pièce annulaire segmentée et dont le diamètre intérieur est sensiblement égal au diamètre extérieur de cette dernière.

Chacune des surfaces extérieures profilées peut alors comprendre une partie dentée assurant une solidarisation des tiges en translation et une partie prismatique assurant une solidarisation des tiges en rotation.

De façon à éviter une déconnexion accidentelle, notamment au moment du montage, la bague rigide est normalement solidarisée de la pièce annulaire segmentée par un organe frangible.

Avantageusement, les moyens de commande comprennent un piston disposé coaxialement autour de la bague rigide dans un cylindre solidaire du premier sous-ensemble, une chambre de commande apte à recevoir un fluide sous pression étant formée entre le cylindre et une face du piston tournée vers le deuxième sous-ensemble, le piston étant apte à venir en appui contre un épaulement de la bague rigide tourné vers le deuxième sous-ensemble, pour faire coulisser ladite bague sur la pièce annulaire segmentée et libérer lesdits moyens de raccordement lorsque ledit fluide sous pression est injecté dans la chambre de commande.

Dans ce cas, la pièce annulaire segmentée comporte de préférence, du côté opposé au deuxième sous-ensemble, un prolongement de diamètre extérieur réduit terminé par un épaulement extérieur sur lequel peut venir en appui la bague rigide, la première tige comportant également un épaulement adjacent audit prolongement, de telle sorte que la bague rigide, la pièce annulaire segmentée et la première tige restent liées au premier sous-ensemble lorsque les moyens de raccordement sont libérés, seule la deuxième tige restant liée au deuxième sous-ensemble.

Enfin, un déplacement intempestif du piston par rapport au cylindre est normalement empêché par un deuxième organe frangible.

Un mode de réalisation préféré de l'invention va à présent être décrit, à titre d'exemple non limitatif, en se référant aux dessins annexés, dans lesquels :
- la figure 1 est une vue en coupe longitudinale représentant un mécanisme de liaison conforme à l'invention, préalablement à son montage ;
- la figure 2 est une vue en coupe schématique comparable à la figure 1 représentant le mécanisme de liaison monté assurant l'assemblage des deux sous-ensembles ;
- la figure 3 est une vue en coupe schématique comparable à la figure 2 représentant le mécanisme de liaison immédiatement après son déverrouillage ; et
- la figure 4 est une vue en perspective représentant à plus grande échelle une partie des moyens de raccordement déverrouillables du mécanisme de liaison illustré sur les figures 1 à 3.

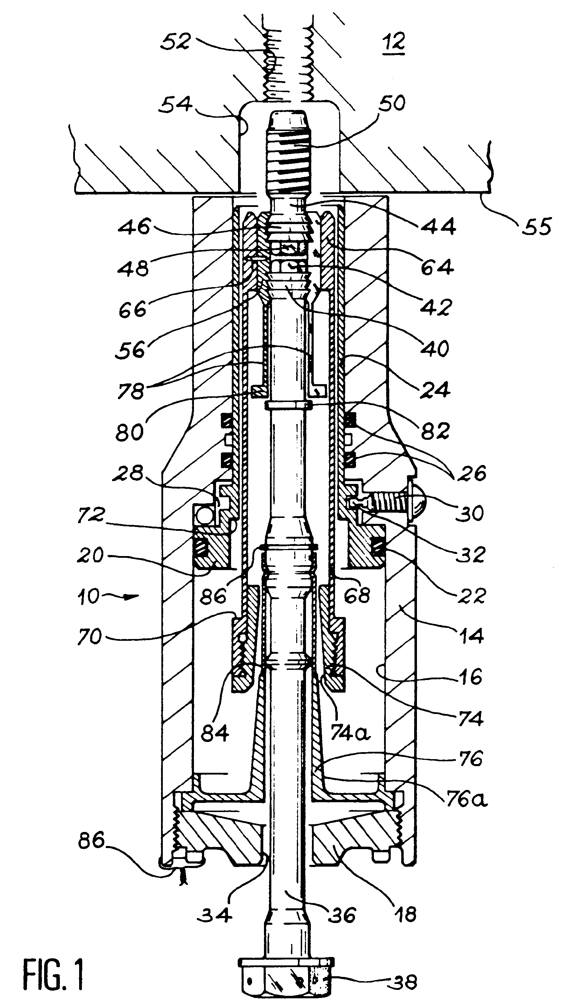

Sur la figure 1, la référence 10 désigne de façon générale un mécanisme de liaison à déverrouillage rapide sans éjection conforme à l'invention. Un ou plusieurs mécanismes de ce type, solidaires d'un premier sous-ensemble (non représenté) qui peut notamment être la structure d'un engin spatial tel qu'une fusée ou un satellite, permettent de monter sur ce premier sous-ensemble un deuxième sous-ensemble 12 qui doit pouvoir être séparé rapidement du premier, sans pour autant être éjecté.

Le mécanisme de liaison 10 comprend un cylindre 14 délimitant intérieurement un alésage étagé 16 ouvert à chacune de ses extrémités. Cet alésage étagé 16 comprend une partie de relativement petit diamètre prévue pour être tournée vers le sous-ensemble 12 et une partie de relativement grand diamètre terminée par un taraudage dans lequel est vissé un bouchon d'extrémité 18.

Un piston annulaire 20 est reçu dans la partie de relativement grand diamètre de l'alésage 16. Un joint d'étanchéité torique 22 reçu dans une gorge formée à la périphérie du piston 20 engage de façon étanche la paroi de l'alésage 16. Du côté du sous-ensemble 12, le piston 20 est équipé d'un prolongement tubulaire 24 qui est reçu de façon coulissante dans la partie de relativement petit diamètre de l'alésage 16. La surface extérieure de ce prolongement tubulaire 24 est en contact avec deux joints d'étanchéité toriques 26 logés dans des gorges formées dans la partie de relativement petit diamètre de l'alésage 16. Cet agencement permet de délimiter de façon étanche entre le cylindre 14 et la face du piston 20 tournée vers le sous-ensemble 12 une chambre de commande 28 apte à recevoir un fluide sous pression à partir de moyens de commande extérieurs qui ne font pas partie du mécanisme.

Ces moyens de commande extérieurs peuvent être d'un type quelconque, et notamment pneumatiques, hydrauliques ou pyrotechniques. Le mécanisme décrit utilise de préférence une énergie pyrotechnique en régime détonique, dont on exploite à la fois les effets mécaniques du type onde de chocs et les effets thermiques produits par la combustion d'une substance explosive.

Une vis 30 traverse radialement le cylindre 14 et comporte une extrémité 32 de section réduite constituant un organe frangible (c'est-à-dire apte à se rompre lorsqu'il est soumis à un effort de cisaillement) qui pénètre dans une gorge annulaire formée dans la partie du prolongement tubulaire 24 attenante au piston 20. Cette vis 30 immobilise normalement le piston 20 dans une position de repos dans laquelle ce piston est en appui contre l'épaulement formé entre les parties de relativement petit et relativement grand diamètres de l'alésage 16.

Le bouchon 18 présente en son centre un trou 34 que traverse une tige cylindrique 36 disposée coaxialement à l'intérieur du cylindre 14. Cette tige 36 est pourvue, à l'extérieur du mécanisme, d'une tête de manoeuvre 38, par exemple de forme hexagonale dans le mode de réalisation représenté. A son extrémité opposée, la tige cylindrique 36 comporte une surface extérieure profilée comprenant une partie dentée 40 et une partie prismatique 42, par exemple de forme hexagonale. La partie dentée 40 est formée de dents annulaires dont les faces tournées vers le sous-ensemble 12 sont orientées radialement. La longueur de la tige 36 est légèrement supérieure à la longueur du cylindre 14, de telle sorte que cette surface profilée fait saillie au-delà de l'extrémité du cylindre lorsque la tête de manoeuvre est en appui sur le bouchon 18.

Une deuxième tige cylindrique 44, de longueur et de poids très réduits par rapport à la tige 36, est placée coaxialement dans le prolongement de cette dernière, du côté de l'extrémité comportant la partie dentée 40 et la partie prismatique 42. L'extrémité de la tige cylindrique 44 adjacente à la tige cylindrique 36 comporte également une surface extérieure profilée comprenant une partie dentée 46 et une partie prismatique 48, par exemple de forme hexagonale. La partie dentée 46 est formée de dents annulaires dont les faces opposées au sous-ensemble 12 sont orientées radialement. A son extrémité opposée, la tige cylindrique 44 est munie d'un filetage 50 apte à être vissé dans un trou taraudé 52 formé dans le fond d'un évidement 54 ménagé sur une face plane 55 du sous-ensemble 12 prévue pour être pressée contre la face d'extrémité du cylindre 14. Il est à noter que la faible longueur de la tige 44 lui permet d'être totalement escamotée à l'intérieur de l'évidement 54, son extrémité adjacente à la tige 36 étant placée en retrait par rapport à la face 55 du sous-ensemble 12 lorsque la tige 44 est vissée dans ce dernier.

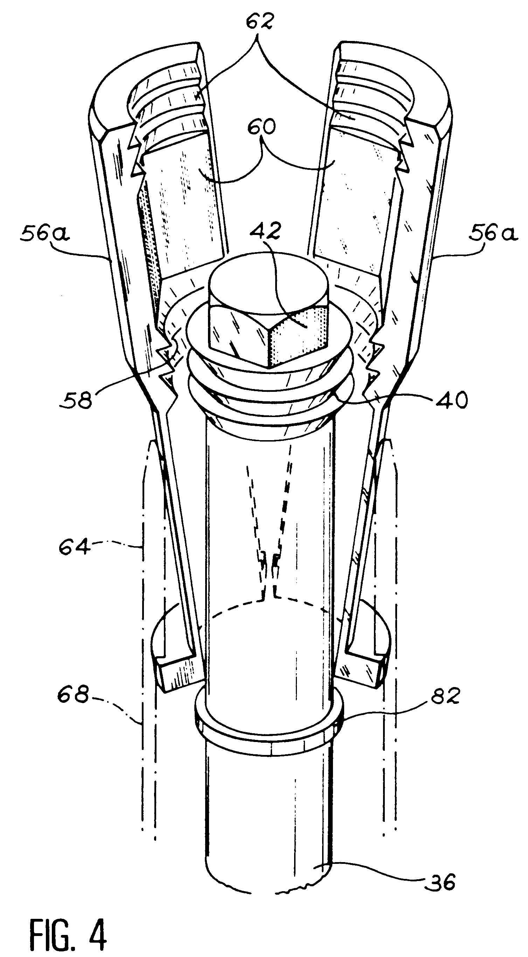

Autour des extrémités adjacentes des tiges 36 et 44 comportant les surfaces extérieures profilées est placée une pièce annulaire segmentée 56, formée par exemple de trois segments et dont le profil intérieur est complémentaire des surfaces extérieures profilées formées sur chacune des tiges 36 et 44. Ainsi, comme l'illustre mieux la figure 4, chacun des segments 56a de la pièce annulaire segmentée 56 présente sur sa surface intérieure une partie inférieure dentée 58 complémentaire de la partie dentée 40, une partie centrale prismatique 60 complémentaire à la fois des parties prismatiques 42 et 48 et une partie supérieure dentée 62 complémentaire de la partie dentée 46.

La pièce annulaire segmentée 56 comporte une surface extérieure cylindrique avec laquelle est normalement en contact la surface intérieure cylindrique d'une bague rigide 64, qui assure ainsi le maintien en prise de la pièce annulaire segmentée 56 sur les surfaces extérieures profilées formées sur les extrémités adjacentes des tiges 36 et 44.

L'ensemble qui vient d'être décrit constitue des moyens de raccordement déconnectables par lesquels les tiges 36 et 44 sont normalement solidarisées à la fois en rotation et en translation. Plus précisément, les parties dentées 40, 46, 58 et 62 permettent de solidariser les deux tiges en translation, alors que les parties prismatiques 42, 48 et 60 permettent de solidariser les deux tiges en rotation. Il est ainsi possible, en agissant à l'aide d'une clé appropriée sur la tête de manoeuvre 38, qui est toujours parfaitement accessible depuis l'extérieur du mécanisme, de visser l'extrémité de la tige 44 comportant le filetage 50 dans le trou taraudé 52 formé dans le sous-ensemble 12, jusqu'à ce que la tête de manoeuvre 38 vienne en appui sur le bouchon 18. L'effort de serrage désiré peut ensuite être appliqué entre le cylindre 14 et le sous-ensemble 12. De plus, cet effort de serrage peut être contrôlé de façon précise en mesurant l'allongement de la tige 36, par exemple à l'aide de moyens de mesure ultrasonore. En effet, de tels moyens de mesure ultrasonore constituent un moyen extérieur, non embarqué, qui permet de mesurer directement la tension appliquée, sans qu'il soit nécessaire de faire des hypothèses sur les frottements entre les pièces.

Par ailleurs, comme le montre notamment la figure 1, l'ensemble constitué par les deux tiges 36 et 44 et par les moyens de raccordement déconnectables 56, 64 est placé à l'intérieur du piston 20 et de son prolongement 24, avec un certain jeu radial, de telle sorte qu'il n'interfère pas avec ces derniers. Cet ensemble permet donc de solidariser et de désolidariser le sous-ensemble 12 du cylindre 14 de façon simple, fiable et répétitive, sans interférer avec le piston 20.

Afin d'éviter un glissement accidentel de la bague rigide 64 sur la pièce annulaire segmentée 56, l'un au moins des segments 56a est avantageusement relié à la bague 64 par une goupille frangible 66.

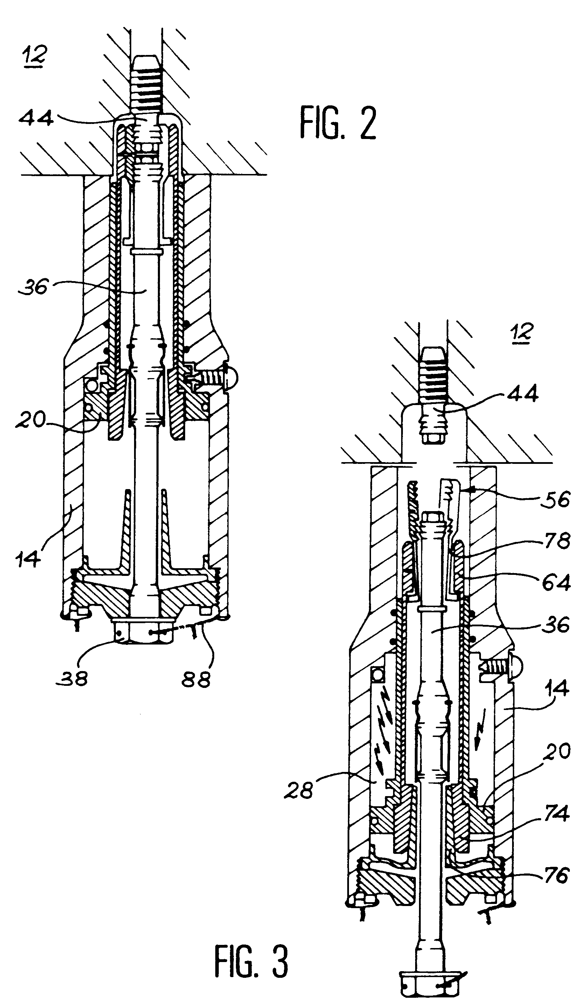

Du côté opposé au sous-ensemble 12, la bague rigide 64 comporte un prolongement tubulaire 68 qui s'étend coaxialement autour de la tige 36 et à l'intérieur du piston 20 et de son prolongement 24, jusqu'à l'intérieur de la partie de relativement grand diamètre de l'alésage 16. Le diamètre intérieur du prolongement 68 est supérieur au diamètre extérieur de la pièce annulaire segmentée 56. Sur sa surface extérieure et à proximité de son extrémité, le prolongement tubulaire 68 comporte un épaulement 70 tourné vers le sous-ensemble 12 et prévu pour se trouver, lorsque le montage est terminé (figure 2) à proximité immédiate d'un épaulement 72 formé à l'intérieur du piston 20. Cet agencement permet, lors d'un déplacement de ce dernier en éloignement de la pièce 12, d'entraîner dans la même direction la bague rigide 64, après avoir rompu la goupille frangible 66, de façon à libérer la pièce annulaire segmentée 56.

L'extrémité du prolongement tubulaire 68 porte également une bague intérieure vissée 74 présentant intérieurement une surface tronconique 74a de faible conicité, dont l'extrémité de plus grand diamètre est tournée vers le bouchon 18. Cette surface tronconique est prévue pour venir coiffer, à la fin du déplacement de la bague rigide 64 vers le bouchon 18, une surface tronconique complémentaire 76a formée sur la surface extérieure d'une pièce d'amortissement 76. Cette pièce d'amortissement, réalisée en un matériau déformable, est fixée par pincement entre le couvercle 18 et le cylindre 14.

La pièce annulaire segmentée 56 comporte également à son extrémité opposée au sous-ensemble 12 un prolongement tubulaire 78 dont le diamètre extérieur est sensiblement inférieur au diamètre intérieur de la bague rigide 64. A son extrémité, ce prolongement tubulaire 78 comporte une collerette extérieure 80 formant un épaulement contre lequel peut venir en appui la bague rigide 64, après rupture de la goupille frangible 66, lorsque la bague est entraînée par le piston 20.

La tige 36 comporte également une collerette 82 qui se trouve normalement située à proximité immédiate de l'extrémité du prolongement tubulaire 78 de la pièce annulaire segmentée 56. Cet agencement permet au piston 20 d'entraîner la tige 36, dans la deuxième phase de son déplacement, par l'intermédiaire de la bague rigide 64 et de la pièce annulaire segmentée 56. L'extrémité de la tige 36 qui fait normalement saillie à l'intérieur de l'évidement 54 formé dans le sous-ensemble 12 se trouve alors escamotée en totalité à l'intérieur du cylindre 14.

Enfin, la tige cylindrique 36 supporte avantageusement dans sa partie centrale un tube 84 dont l'extrémité tournée vers le sous-ensemble 12 est située à proximité immédiate d'un circlips 86 monté dans une gorge de la tige 36. Le tube 84 est en outre serti dans une gorge annulaire peu profonde voisine du circlips 86.

Lors du montage, et comme l'illustre la figure 1, l'extrémité du tube 84 opposée au circlips 86 est en appui sur l'extrémité de la pièce d'amortissement 76 tournée vers le sous-ensemble 12 et permet à l'extrémité de la tige cylindrique 44 portant le filetage 50 de faire saillie au-delà de l'extrémité du cylindre 14.

Le montage particulièrement aisé du mécanisme 10 conforme à l'invention, ainsi que son déverrouillage vont à présent être décrits brièvement en se référant aux figures 1 à 3.

Lors de la préparation du mécanisme de liaison, le piston 20 est tout d'abord mis en place et immobilisé dans le cylindre 14 par la vis 30. Toutes les autres pièces du mécanisme comprenant notamment les tiges 36 et 44, la pièce annulaire segmentée 56, la bague rigide 64, le bouchon 18, la pièce d'amortissement 76 et le tube 84 sont assemblées séparément. L'ensemble ainsi constitué est mis en place dans le cylindre 14 et fixé à l'aide du bouchon 18, ce dernier étant ensuite immobilisé par exemple au moyen d'un fil métallique illustré en 86 sur la figure 1. L'ensemble précité peut ainsi être monté et démonté très facilement, sans interférer avec le piston 20 et sans agir sur la vis 30 qui en assure le blocage.

Le sous-ensemble 12 qui doit être fixé au sous-ensemble (non représenté) portant le mécanisme 10 est alors amené dans la position illustrée sur la figure 1, afin que l'extrémité de la tige cylindrique 44 portant le filetage 50 soit située à l'intérieur de l'évidement 54.

En agissant sur la tête de manoeuvre 38 à l'aide d'une clé, de la manière déjà mentionnée precédemment, l'opérateur peut de façon très simple visser l'extrémité de la tige 44 portant le filetage 50 dans le trou taraudé 52 du sous-ensemble 12. Lorsque la tête de manoeuvre 38 vient en appui sur le bouchon 18, le serrage est poursuivi jusqu'à l'obtention d'un effort de placage déterminé de la face 55 du sous-ensemble 12 contre la face d'extrémité adjacente du cylindre 14. Cet effort peut être contrôlé avec une précision relativement grande en effectuant une mesure de l'allongement de la tige 36 à l'aide d'un système de mesure ultrasonore extérieur, non embarqué.

Lorsque ce serrage est terminé, on se trouve dans la position illustrée sur la figure 2 et un déserrage accidentel est empêché, par exemple en passant un fil métallique 88 entre la tête de manoeuvre 38 et le cylindre 14.

Lorsqu'on désire séparer le sous-ensemble 12 du sous-ensemble principal auquel est fixé le cylindre 14, on actionne les moyens de commande extérieurs qui communiquent avec la chambre de commande 28. Du fluide sous pression est alors admis dans cette chambre et a pour effet de déplacer le piston 20 en éloignement du sous-ensemble 12. Le piston entraîne dans son déplacement la bague rigide 64, après avoir rompu la goupille frangible 66. La bague rigide 64 se trouve alors en face du prolongement tubulaire 78 de diamètre extérieur réduit de la pièce annulaire segmentée 56. Par conséquent, les segments 56a constituant cette dernière ne sont plus maintenus et s'écartent radialement, déconnectant ainsi les tiges 36 et 44. Le sous-ensemble 12 est alors désolidarisé du sous-ensemble principal portant le cylindre 14.

Comme l'illustre la figure 3, le piston 20 entraîne ensuite dans son déplacement les segments 56a de la pièce annulaire segmentée 56 ainsi que la tige cylindrique 36, de telle sorte que seule la tige cylindrique 44 reste liée au sous-ensemble 12 et que l'ensemble des autres pièces est effacé à l'intérieur du cylindre 14. La séparation des deux sous-ensembles peut donc être faite sans risque que l'une des pièces du mécanisme ne reste accrochée accidentellement au sous-ensemble 12.

A la fin du déplacement du piston 20, de la bague rigide 64, de la pièce annulaire segmentée 56 et de la tige cylindrique 36, la surface tronconique 74a formée à l'intérieur de la bague vissée 74 vient en appui sur la surface tronconique complémentaire 76a formée sur la pièce d'amortissement 76. Cette dernière se déforme alors comme l'illustre la figure 3 et absorbe l'énergie résiduelle.

Bien entendu, l'invention n'est pas limitée au mode de réalisation qui vient d'être décrit à titre d'exemple, mais en couvre toutes les variantes. Ainsi, les surfaces extérieures profilées formées sur chacune des extrémités des tiges 36 et 44 peuvent présenter des formes différentes des formes décrites, à condition qu'elles assurent la solidarisation des tiges en rotation et en translation lorsqu'elles sont coiffées par la pièce annulaire déformable 56. Cela peut notamment être obtenu en réalisant des surfaces prismatiques complémentaires aux extrémités adjacentes des deux tiges, ces surfaces venant s'emboîter l'une dans l'autre pour solidariser les tiges en rotation lorsque celles-ci sont solidarisées en translation par une pièce annulaire segmentée qui n'assure alors que la solidarisation en translation des deux tiges.

Par ailleurs, la liaison vissée entre la tige cylindrique 44 et le sous-ensemble 12 peut être obtenue de manière différente, le sous-ensemble pouvant comporter une tige filetée qui vient se visser dans un trou taraudé formé à l'extrémité adjacente de la tige 44.

En outre, comme on l'a déjà mentionné, les moyens de commande extérieurs au mécanisme peuvent être d'une nature quelconque, aptes à délivrer un fluide sous pression dans la chambre de commande 28.

Enfin, si le mécanisme qui vient d'être décrit ne comprend pas d'éjecteur et libère le sous-ensemble 12 sans vitesse initiale, on comprend qu'un éjecteur pourrait y être associé, sans sortir du cadre de l'invention.

## Revendications

1. Mécanisme de liaison, à déverrouillage rapide, de deux sous-ensembles (12,14), comprenant deux organes (36,44) normalement solidarisés en translation par des moyens de raccordement déconnectables (56,64), chacun de ces organes prenant appui respectivement sur l'un des deux sous-ensembles de façon à appliquer ces derniers l'un contre l'autre, et des moyens de commande (20) dont un actionnement déverrouille les moyens de raccordement, désolidarisant ainsi lesdits organes, caractérisé par le fait que lesdits organes comprennent une première tige (36) montée dans un premier (14) des sous-ensembles et comportant une tête de manoeuvre (38) accessible depuis l'extérieur de ce premier sous-ensemble, et une deuxième tige (44) comportant un filetage (50) apte à être vissé dans le deuxième sous-ensemble (12), lesdits moyens de raccordement déconnectables (56,64) solidarisant normalement lesdites première et deuxième tiges également en rotation, de telle sorte que le filetage de la deuxième tige peut être vissé dans le deuxième sous-ensemble en agissant sur la tête de manoeuvre de la première tige.

2. Mécanisme selon la revendication 1, caractérisé par le fait que les moyens de raccordement déconnectables comprennent une pièce annulaire segmentée (56) ayant un profil intérieur (58,60,62) complémentaire de surfaces extérieures profilées (40,42,46,48) formées sur les extrémités adjacentes de la première tige (36) et de la deuxième tige (44), et une bague rigide (64) normalement placée autour de la pièce annulaire segmentée et dont le diamètre intérieur est sensiblement égal au diamètre extérieur de cette dernière.

3. Mécanisme selon la revendication 2, caractérisé par le fait que chacune des surfaces extérieures profilées comprend une partie dentée (40,46) assurant une solidarisation des tiges en translation et une partie prismatique (42,48) assurant une solidarisation des tiges en rotation.

4. Mécanisme selon l'une quelconque des revendications 2 et 3, caractérisé par le fait que la bague rigide (64) est normalement solidarisée de la pièce annulaire segmentée (56) par un organe frangible (66).

5. Mécanisme selon l'une quelconque des revendications 2 à 4, caractérisé par le fait que les moyens de commande comprennent un piston (20) disposé coaxialement autour de la bague rigide (64) dans un cylindre (14) solidaire du premier sous-ensemble, une chambre de commande (28) apte à recevoir un fluide sous pression étant formée entre le cylindre et une face du piston tournée vers le deuxième sous-ensemble (12), le piston étant apte à venir en appui contre un épaulement (70) de la bague rigide tourné vers le deuxième sous-ensemble, pour faire coulisser ladite bague sur la pièce annulaire segmentée et libérer lesdits moyens de raccordement lorsque ledit fluide sous pression est injecté dans la chambre de commande.

6. Mécanisme selon la revendication 5, caractérisé par le fait que la pièce annulaire segmentée (56) comporte, du côté opposé au deuxième sous-ensemble, un prolongement (78) de diamètre extérieur réduit terminé par un épaulement extérieur (80) sur lequel peut venir en appui la bague rigide (64), la première tige (36) comportant également un épaulement (82) adjacent audit prolongement, de telle sorte que la bague rigide, la pièce annulaire segmentée et la première tige restent liées au premier sous-ensemble lorsque les moyens de raccordement sont libérés, seule la deuxième tige (44) restant liée au deuxième sous-ensemble.

7. Mécanisme selon la revendication 6, caractérisé par le fait que l'extrémité du cylindre (14) opposée au deuxième sous-ensemble (12) comporte une pièce d'amortissement (76) contre laquelle vient en appui un prolongement (68) de la bague rigide (64), lorsque cette dernière est entraînée par le piston (20) après injection dudit fluide sous pression dans la chambre de commande, la bague rigide (64), la pièce annulaire segmentée (56) et la première tige (36) étant alors escamotées en totalité à l'intérieur dudit cylindre (14).

8. Mécanisme selon l'une quelconque des revendications 5 à 7, caractérisé par le fait que la première et la deuxième tiges (36, 44), la pièce annulaire segmentée (56) et la bague rigide (64) constituent un ensemble apte à solidariser et à désolidariser le deuxième sous-ensemble (12) par rapport au premier sous-ensemble (14), sans interférer avec le piston (20).

9. Mécanisme selon l'une quelconque des revendications 5 à 8, caractérisé par le fait que le piston (20) est normalement solidarisé du cylindre (14) par un deuxième organe frangible (32).

10. Mécanisme selon l'une quelconque des revendications précédentes, caractérisé par le fait que la deuxième tige (44) est escamotée en totalité dans un évidement (54) formé dans la face (55) du deuxième sous-ensemble adjacente au premier sous-ensemble, lorsque ladite deuxième tige est vissée dans le deuxième sous-ensemble.

## Patentansprüche

1. Verbindungsmechanismus für Schnellentkupplung von zwei Teileinheiten (12, 14), bestehend aus zwei Organen (36, 44), die normalerweise durch lösbare Anschlußmittel (56, 64) gegen Verschieben fest verbunden sind, wobei jedes dieser Organe an einer der beiden Teileinheiten dergestalt in Anlage kommt, daß diese letzteren aneinandergedrückt werden, sowie aus Bedienungsmitteln (20), deren Betätigung die Anschlußmittel entriegelt, wodurch sich die genannten Organe voneinander lösen,
dadurch gekennzeichnet, daß die genannten Organe aus einem ersten Schaft (36), der in einer ersten (14) der Teileinheiten eingesetzt ist und einen von außerhalb dieser ersten Teileinheit zugänglichen Bedienkopf (38) aufweist, und einem zweiten Schaft (44) mit einem Gewinde (50), das in die zweite Teileinheit (12) eingeschraubt werden kann, bestehen, wobei die genannten lösbaren Anschlußmittel (56, 64) den genannten ersten und zweiten Schaft normalerweise auch gegen Drehbewegung fest verbinden, dergestalt daß das Gewinde des zweiten Schafts durch Einwirken auf den Bedienkopf der ersten Teileinheit in die zweite Teileinheit eingeschraubt werden kann.

2. Verbindungsmechanismus nach Anspruch 1,
dadurch gekennzeichnet, daß die lösbaren Anschlußmittel aus einem segmentierten, ringförmigen Teil (56), dessen Innenprofil (58, 60, 62) komplementär zu den Profil-Außenflächen (40, 42, 46, 48) an den aneinanderstoßenden Enden des ersten Schafts (36) und des zweiten Schafts (44) geformt ist, und einem starren Ring (64), der normalerweise um das segmentierte, ringförmige Teil herum angeordnet ist und dessen Innendurchmesser genau gleich dem Außendurchmesser dieses letzteren ist, bestehen.

3. Verbindungsmechanismus nach Anspruch 2,
dadurch gekennzeichnet, daß jede der ProfilAußenflächen einen gezahnten Teil (40, 46) aufweist, der eine feste Verbindung der Schäfte in Vorschubrichtung gewährleistet, sowie einen prismatisch geformten Teil (42, 48), der eine feste Verbindung der Schäfte in Drehrichtung gewährleistet.

4. Verbindungsmechanismus nach einem der Ansprüche 2 und 3,
dadurch gekennzeichnet, daß der starre Ring (64) normalerweise durch ein ausfransbares Teil (66) mit dem segmentierten, ringförmigen Teil (56) fest verbunden ist.

5. Verbindungsmechanismus nach einem der Ansprüche 2 bis 4,
dadurch gekennzeichnet, daß die Betätigungsmittel aus einem Kolben (20) bestehen, der koaxial um den starren Ring (64) herum in einem mit der ersten Teileinheit fest verbundenen Zylinder (14) angeordnet ist, wobei eine Betätigungskammer (28) zur Aufnahme einer unter Druck stehenden Flüssigkeit zwischen dem Zylinder und einer der zweiten Teileinheit (12) zugewandten Kolbenfläche gebildet wird, wobei der Kolben geeignet ist, in Anlage an einem der genannten zweiten Teileinheit zugewandten Absatz (70) des starren Rings zu kommen, um den genannten Ring auf dem segmentierten, ringförmigen Teil gleiten zu lassen und die genannten Anschlußmittel zu lösen, wenn die genannte unter Druck stehende Flüssigkeit in die Betätigungskammer eingespritzt wird.

6. Verbindungsmechanismus nach Anspruch 5,
dadurch gekennzeichnet, daß das segmentierte, ringförmige Teil (56) an der von der zweiten Teileinheit abgewandten Seite eine Verlängerung (78) mit kleinerem Außendurchmesser aufweist, die mit einem Außenbund (80) endet, an dem der starre Ring (64) in Anlage kommen kann, wobei der erste Schaft (36) ebenfalls einen Bund (82) aufweist, der an die genannte Verlängerung angrenzt, so daß der starre Ring, das segmentierte, ringförmige Teil und der erste Schaft mit der ersten Teileinheit verbunden bleiben, wenn die Anschlußmittel gelöst werden, wobei nur der zweite Schaft (44) mit der zweiten Teileinheit verbunden bleibt.

7. Verbindungsmechanismus nach Anspruch 6,
dadurch gekennzeichnet, daß das Ende des Zylinders (14), das von der zweiten Teileinheit (12) abgewandt ist, ein Dämpfungsteil (76) aufweist, an dem eine Verlängerung (68) des starren Rings (64) in Anlage kommt, wenn dieser letztere nach Einspritzen der genannten unter Druck stehenden Flüssigkeit in die Betätigungskammer von dem Kolben (20) mitgenommen wird, wobei der starre Ring (64), das segmentierte, ringförmige Teil (56) und der erste Schaft (36) dann vollkommen ins Innere des genannten Zylinders (14) eingeschoben werden.

8. Verbindungsmechanismus nach einem der Ansprüche 5 bis 7,
dadurch gekennzeichnet, daß der erste und der zweite Schaft (36, 44), das segmentierte, ringförmige Teil (56) und der starre Ring (64) eine Einheit bilden, mit der die zweite Teileinheit (12) mit der ersten Teileinheit (14) verbunden und von ihr gelöst werden kann, ohne daß der Kolben (20) behindert wird.

9. Verbindungsmechanismus nach einem der Ansprüche 5 bis 8,
dadurch gekennzeichnet, daß der Kolben (20) normalerweise durch ein zweites ausfransbares Teil (32) mit dem Zylinder (14) fest verbunden ist.

10. Verbindungsmechanismus nach einem der vorhergehenden Ansprüche,
dadurch gekennzeichnet, daß der zweite Schaft (44) vollkommen in einer Vertiefung (54) verschwindet, die in der an die erste Teileinheit angrenzenden Seite (55) der zweiten Teileinheit ausgeführt ist, wenn der genannte zweite Schaft in die zweite Teileinheit eingeschraubt ist.

## Claims

1. Connecting mechanism, with fast unlocking, for two subassemblies (12, 14), having two members (36, 44) which are normally joined in translation by disconnectable connecting means (56, 64), each of the members then bearing respectively on one of the two subassemblies in such a way as to apply them to one another, as well as control means (20), whose actuation unlocks the connecting means, thus disengaging the said members, characterized in that the said members have a first rod (36) mounted in a first (14) of the subassemblies and has an operating head (38) accessible from the outside of said first subassembly, and a second rod (44) having a thread (50) which can be screwed into the second subassembly (12), said disconnectable connecting means (56, 64) normally joining said first and second rods, also in rotation, in such a way that the thread of the second rod can be screwed into the second subassembly by acting on the operating head of the first rod.

2. Mechanism according to claim 1, characterized in that the disconnectable connecting means incorporate an annular segmented part (56) having an internal profile (58, 60, 62) complementary of the profiled outer surfaces (40, 42, 46, 48) formed on the adjacent ends of the first rod (36) and the second rod (44), and a rigid ring (64) normally placed around the segmented annular part and whose internal diameter is substantially equal to the external dianeter of the latter.

3. Mechanism according to claim 2, characterized in that each of the profiled outer surfaces comprises a toothed portion (40, 46) ensuring a joining of the rods in translation and a prismatic portion (42, 48) ensuring a joining of the rods in rotation.

4. Mechanism according to either of the claims 2 and 3, characterized in that the rigid ring (64) is normally joined to the segmented annular part (56) by a frangible member (66).

5. Mechanism according to any one of the claims 2 to 4, characterized in that the control means incorporate a piston (20) arranged coaxially around the rigid ring (64) in a cylinder (14) integral with the first subassembly, a control chamber (28) able to receive a pressurized fluid being formed between the cylinder and a face of the piston turned towards the second subassembly (12), the piston being able to bear against a shoulder (70) of the rigid ring turned towards the second subassembly, in order to make said ring slide on the segmented annular part and thus release the said connection means when said pressurized fluid is injected into the control chamber.

6. Mechanism according to claim 5, characterized in that the segmented annular part (56) has, on the side opposite to the second subassembly, a reduced external diameter extension (78) terminated by an external shoulder (80), on which can bear the rigid ring (64), the first rod (36) also having a shoulder (82) adjacent to the said extension, in such a way that the rigid ring, the segmented annular part and the first rod remain connected to the first subassembly when the connecting means are released, only the second rod (44) remaining connected to the second subassembly.

7. Mechanism according to claim 6, characterized in that the end of the cylinder (14) opposite to the second subassembly (12) has a damping part (76) against which bears an extension (68) of the rigid ring (64), when the latter is displaced by the piston (20) following the injection of the pressurized fluid into the control chamber, the rigid ring (64), the annular segmented part (56) and the first rod (36) then being totally retracted within the said cylinder (14).

8. Mechanism according to any one of the claims 5 to 7, characterized in that the first and second rods (36, 44), the segmented annular part (56) and the rigid ring (64) constitute an assembly able to engage and disengage the second subassembly (12) with respect to the first subassembly (14), without interfering with the piston (20).

9. Mechanism according to any one of the claims 5 to 8, characterized in that the piston (20) is normally joined to the cylinder (14) by a second frangible member (32).

10. Mechanism according to any one of the preceding claims, characterized in that the second rod (44) is entirely retracted into a recess (54) formed in the face (55) of the second subassembly adjacent to the first subassembly, when said second rod is screwed into the second subassembly.
